# EUROPEAN PATENT APPLICATION

(11) **EP 0 860 498 A1**
(43) Date of publication of application: **26.08.1998**
(21) Application number: 97922154.6
(22) Date of filing: 23.05.1997
(51) Int. Cl.: C12H 1/16

(54) **APPARATUS FOR PROMOTING RIPENING OF LIQUOR OR THE LIKE**

(30) Priority: 27.05.1996 JP 152915/96
(71) Applicant: Kyowa Interface Science Co., Ltd., Asaka-shi, Saitama 351 (JP)
(72) Inventor: ASAKURA, Toshihiro, Tokyo 156 (JP)
(74) Representative: Weber, Joachim, Dr.
(86) International application number: JP9701744
(87) International publication number: WO9745526

(57) **Abstract**

The invention makes it possible to positively promote maturation of alcoholic drinks or the like liquids on industrial scale, by irradiation of weak ultrasonic waves, and provides a device which comprises an industrial scale maturation tank (12) for containing an alcoholic drink or the like liquid (14) which is to be matured, an ultrasonic vibrator (20) for continuously applying a weak ultrasonic vibration to the liquid (14) in the maturing tank (12), and an oscillator for exciting the ultrasonic vibrator. In a preferred embodiment, for example, the ultrasonic vibrator (20) is accommodated within a completely sealed metal casing (18) to form a float-type vibrating body (16) which is adapted to float on the liquid surface (14A) of the alcoholic drink or the like.

## Description

### Technical Field

The present invention relates to a device for promoting maturation of alcoholic drinks or the like liquids, by a continuous irradiation of weak ultrasonic wave thereto.

### Background Art

A device for promoting maturation of alcoholic drinks or the like liquids with the above-mentioned arrangement is disclosed in Japanese Patent No. 1,702,337 (JP 3-69,277B). It has been actually confirmed that irradiation of weak ultrasonic wave of approximately 40 kHz and around 12 mW for about one week, for example, makes it possible to positively achieve maturation of alcoholic drinks such as "Shochu", a clear distilled liquor of Japanese origin.

Also, it has been reported in a report by T. Haseba, et al., "Diminution of Biological Reactivity of Ethanol by Changing the Solution Structure by Weak Ultrasonication", Alcoholism: Clinical Experimental Review, Vol. 17, No. 5, 1993, pp 963-967, of which the inventor is a coauthor, that there exists a significant correlation between various biological reactions and the molecular structure of ethanol water solution, and that alcoholic drinks subjected to an ultrasonic treatment with the above-mentioned maturation promoting apparatus, when compared to alcoholic drinks without being subjected to such treatment, not only serve to considerably improve taste and flavors, but also exert more favorable action to living bodies.

From such a viewpoint, even in brewery industries, there arose demands for a device which promotes maturation of alcoholic drinks or the like by irradiation of weak ultrasonic wave on industrial scale and in a reliable manner.

### Disclosure of the Invention

In order to promote maturation of alcoholic drinks or the like liquid by irradiation of weak ultrasonic wave on an industrial scale and in a reliable manner, the present invention provides a device which comprises: a maturation tank of an industrial scale for containing an alcoholic drink or the like liquid which is to be matured; as well as an ultrasonic vibrator associated with the maturing tank, and an oscillator for exciting the ultrasonic vibrator, wherein the ultrasonic vibrator has such an output characteristic that, in its excited state, a weak ultrasonic wave can be continuously applied to the liquid in the maturing tank.

In the maturation promoting device according to the present invention, the maturation tank has an inner volume or capacity which is approximately 5-10 m³. A maturation tank of such a capacity is conventionally used as such in brewery industries.

In the maturation promoting device according to the present invention, it is preferred that the ultrasonic vibrator has an output characteristic which allows the liquid within the maturation tank to be continuously applied with a ultrasonic vibration having a sound pressure level of approximately 0.35 x 10⁻⁴ W/cm², and/or a ultrasonic vibration of approximately 40 kHz and approximately 200-800 mVp.p, more preferably approximately 400 mVp.p. Moreover, it is preferred that the oscillator has an electric power consumption specification of approximately 0.5-1.0 W.

The ultrasonic vibrator may be constructed such that it is fixedly secured to an appropriate wall surface of the maturation tank, for example, the outer or inner surface of the side wall, bottom wall or the like. Also, the ultrasonic vibrator may be constructed such that it is arranged in a float-type sealed casing which is adapted to float on the surface of the liquid within the maturation tank. In the latter instance, the sealed casing may be comprised of metal, such as stainless steel, titanium alloy or the like, and filled therein with an inert gas, such as nitrogen gas.

It has been actually verified that irradiation of weak ultrasonic wave to an alcoholic drink or the like liquid within the maturation tank, according to the present invention, makes it possible positively to promote maturation of the alcoholic drink or the like even in brewery industries or the like, on industrial scale.

First of all, Japanese Sake subjected to the ultrasonic treatment according to the present invention and a control which was not subjected to such treatment were used as samples. With respect to each of these samples, the temperature and heat quantity at the heat dissipation peak and heat absorption peak were measured by a differential scanning calorimeter (DSC). As a result, there was found a significant difference between these samples in that the molecular structures of alcohol in the Japanese Sake, which had been subjected to the ultrasonic treatment according to the present invention, were more uniformly distributed within the solution and stable, i.e., the maturation was more significantly promoted.

With respect to these samples, furthermore, the relaxation time (so-called T₁) of carbon isotope ¹³C was measured by using a nuclear magnetic resonance spectorometer (NMR). As a result, the measured data were in good conformity with the analysis result obtained by the differential scanning calorimeter(DSC).

Moreover, a sensory analysis was conducted with reference to the sample obtained by subjecting Japanese Sake to an ultrasonic treatment according to the present invention. As a result, it has been confirmed that this sample was sensually more favored than a Japanese Sake which had not been subjected to such a treatment.

### Brief Description of the Drawings

Fig. 1 is a schematic view showing a maturation promoting device according to a first preferred embodiment of the present invention;
Fig. 2(a) is a schematic view showing the vibrating body in the first embodiment;
Fig. 2(b) is a plan view thereof;
Fig. 3 is a schematic view showing a modification of the vibrating body in the previous embodiment;
Fig. 4(a) is a schematic view showing a maturation promoting device according to a second embodiment of the present intention;
Fig. 4(b) is a perspective view showing the vibrating body in the second embodiment;
Fig. 5 is a schematic view showing a maturation promoting device according to a third embodiment of the present invention;
Fig. 6 is a graph showing the change with time of lactic acid and acetic acid concentrations in bloods metabolism experiment performed to human beings with reference to an alcoholic drink which has been subjected to a low power ultrasonic treatment according to the present invention, and
Fig. 7 is a graph showing the change with time of the alcoholic concentration in the breath and the alcoholic concentration in blood according to said experiment.

### Best Mode for Carrying Out the Invention

Although the present invention can be carried out in various manners, representative embodiments illustrated in the drawings will be explained below in detail.

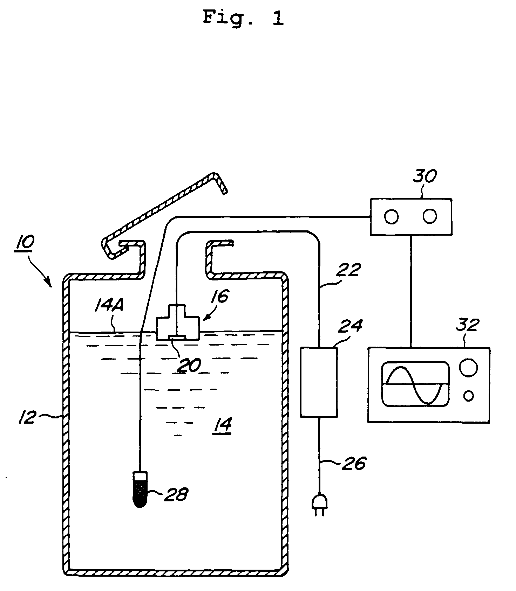

Fig. 1 is a schematic view showing an overall arrangement of the maturation promoting device according to one embodiment of the present invention. The maturation promoting device 10 according to the present embodiment comprises a maturation tank 12 of an industrial scale, and a float-type vibrating body 16 which is associated with the maturation tank 12. The vibrating body 16 in particular is adapted to float on a liquid surface 14A of alcoholic drink or the like liquid 14 which is to be matured within the maturation tank 12. As for the maturation tank 12, it is basically possible to use a conventional tank having a capacity of 5-10 m³, which is typically used in brewery industry, In this instance, the maturation tank 12 may have a specification wherein the diameter is 200 cm, the height is 350 cm and the top opening diameter is 60 cm, for example.

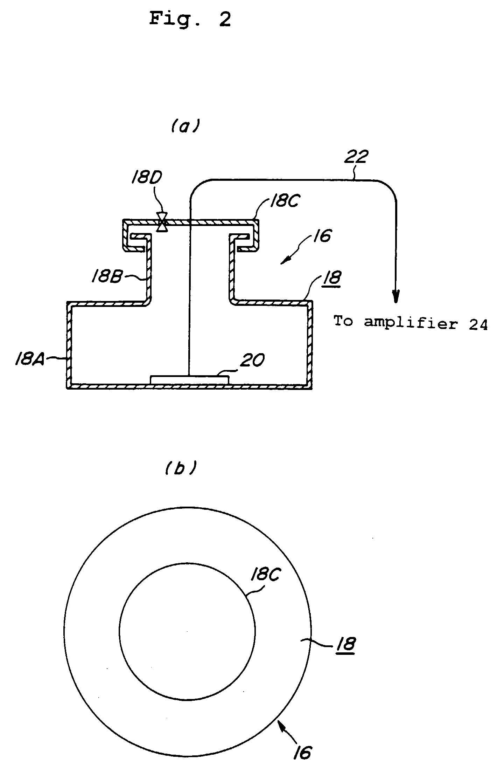

The vibrating body 16 in the maturation promoting device 10 according to the illustrated embodiment comprises a completely sealed metal casing 18 which preferably consists of stainless steel, titanium alloy or the like, and which is filled therein with inert gas, such as nitrogen gas or the like. As shown in Figs. 2(a) and 2(b), the sealed casing 18 comprises a cylindrical lower portion 18A having an outer diameter of 30-40 cm, a cylindrical upper portion 18B having an outer diameter of 15-20 cm, and a top portion which is sealed by a lid 18C. Incidentally, the lid 18C may be provided with a check valve 18D which allows the inert gas to be charged into inside of the metal casing 18, and prohibits leakage of the inside inert gas toward outside.

In the present embodiment, the sealed casing 18 has an inner bottom wall to which a ultrasonic vibrator 20 is fixedly secured. The ultrasonic vibrator 20 is connected to an amplifier 24 via a connection cord 22, and the amplifier 24 is connected to a commercial power supply via a power supply cord 26. The amplifier 24 may be fixedly secured to an appropriate location, such as the outer periphery of the maturation tank 12. The ultrasonic vibrator 20 has such an output characteristic that the alcoholic drink 14 inside the maturation tank 12 is continuously applied with a ultrasonic vibration of a sound pressure level of approximately 0.35 x 10⁻⁴ W/cm² and/or a ultrasonic wave of approximately 40 kHz and about 200-800 mVp.p, more preferably about 400 mVp.p. .The oscillator for the vibrator has an electric power consumption specification of approximately 0.5-1.0 W.

In use, the vibrating body 16 in the maturation promoting device 10 according to the above-mentioned embodiment floats on the liquid surface 14A of the alcoholic drink 14 within the maturation tank 12, since the sealed casing 18 accommodating the ultrasonic vibrator 20 therein functions in its entirety as a float which sufficiently generates the desired buoyancy. The ultrasonic vibrator 20 fixedly secured to the bottom wall inside of the sealed casing 18 is maintained under a continuously operating state so that the alcoholic drink 14 inside of the maturation tank 12 is continuously applied with a weak ultrasonic vibration in the excited state of the vibrating body. When measured by using an underwater microphone as will be explained hereinafter, the weak ultrasonic vibration corresponds to a ultrasonic vibration of a sound pressure level of approximately 0.35 x 10⁻⁴ W/cm² and/or a ultrasonic wave of approximately 40 kHz and about 200-800 mVp.p, more preferably about 400 mVp.p. Therefore, the alcoholic drink 14 inside of the maturation tank 12 is always applied by the ultrasonic vibrator 20 with a ultrasonic vibration of an optimum energy intensity. As a result, it is possible to prevent nonuniform distribution withn the maturation tank 12 of various components of the alcoholic drink 14, and stabilize the molecular structure as a whole since a single molecule of alcohol is densely surrounded by several molecules of water. By this, it is possible positively to promote maturation of alcoholic drinks at brewery industry even on an industrial scale, and markedly improve the quality of alcoholic drinks shipped from the factory as to significantly exhibit excellent taste and flavor. As explained above, such a unique phenomena has been actually verified by differential scanning calorimeter, NMR analyzer, density meter and the like, and also confirmed by sensory analysis.

In order to further verify usefulness of the maturation promoting device 10 according to the present embodiment, the sound pressure levels at various locations in the liquid have been measured with reference to an alcoholic drink 14 within the maturation tank 14, in the operating state of the ultrasonic vibrator 20. As shown in Fig. 1, the measuring means for such measurement comprises an underwater microphone 28 ("HYDROPHONE" manufactured by Oki Electric Co., Ltd., Japan) which has been immersed in the alcoholic drink 14 within the maturation tank 12, and the ultrasonic vibration radiated from the vibrator 20 and propagating in the liquid has been detected by the underwater microphone 28, and the detected signal was supplied to an oscilloscope 32 (Type "CS-4025" manufactured by Kenwood Corporation, Japan) via an attenuater 30 (+20 dB) to measure the sound pressure level of the ultrasonic vibration. In this instance, the depth of the underwater microphone was changed by four steps so as to measure the sound pressure level for the total of twenty locations, i.e., four outer peripheral locations and a center location at each depth. As a result, it has been confirmed that the sound pressure levels are substantially homogeneous for all of the measuring locations: in other words, the ultrasonic vibration radiated from the vibrator 20 propagates in the liquid 14 within the maturation tank 12 with an extremely homogeneous energy distribution.

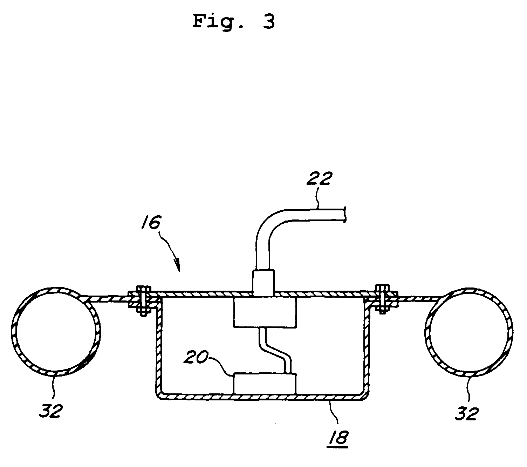

Fig. 3 shows a modification of the vibrating body 16 in the maturation promoting device 10 according to the above-mentioned embodiment, wherein the sealed casing 18 of the vibrating body 16 is further provided with at least one auxiliary float 32. By way of example, the auxiliary float 32 may be of an annular shape to surround the entire periphery of the sealed casing 18, or may comprise dual drums arranged on both sides of the sealed casing 18. This variation is suitable for a sealed casing 18 which by itself does not generate a sufficient buoyancy, since the auxiliary float 32 generates additional buoyancy and also functions as a stabilizer for improving the stability of the vibrating body 16.

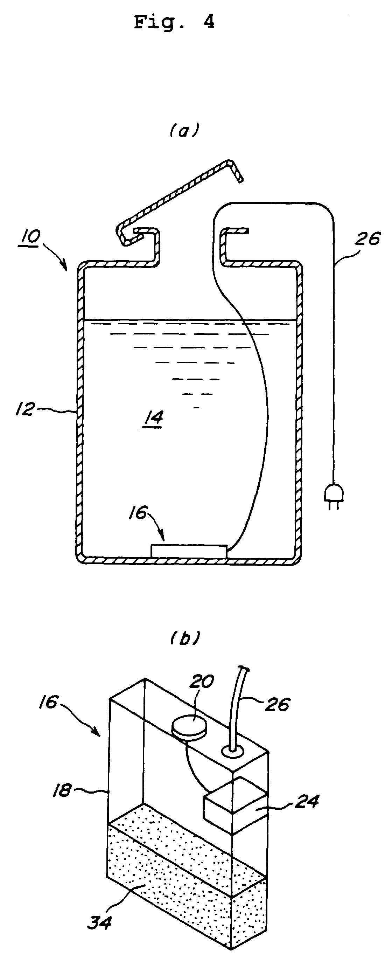

Figs. 4(a) and 4(b) show another embodiment of the maturation promoting device 10 according to the present invention. In the present embodiment, as particularly shown in Fig. 4(a), the vibrating body 16 for continuously applying a weak ultrasonic vibration to the alcoholic drink 14 within the maturation tank 12 is constructed so that it is seated on the bottom wall of the maturation tank 12. In this instance, as shown in Fig. 4(b) by way of example, the vibrating body 16 may comprise a completely sealed metal casing 18 of substantially rectangular shape, so that the ultrasonic vibrator 20, its driver circuit 24 and a weight 34 are fixedly secured. Preferably, the casing 18 comprises metal, such as stainless steel, titanium alloy or the like, and filled therein with inert gas, such as nitrogen gas. The maturation promoting device according to the present embodiment basically performs a maturation promotion function similar to that according to the previous embodiment.

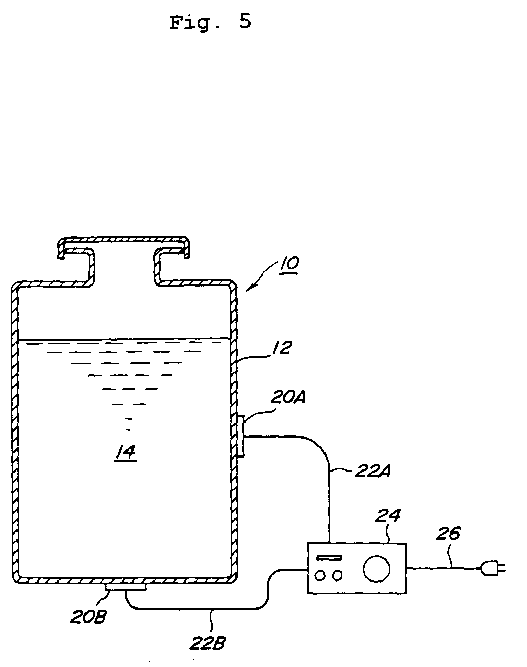

Fig. 5 shows still another embodiment of the maturation promoting device according to the present invention. In the present embodiment, the vibrating body 16 for continuously applying a weak ultrasonic vibration to the alcoholic drink 14 within the maturation tank 12 is constructed so that it includes ultrasonic vibrators 20A, 20B which are fixedly secured to an outer surface of the maturation tank 12, such as outer peripheral surface and/or bottom surface. The ultrasonic vibrator 20 fixedly secured to the outer peripheral surface preferably has an arcuate cross-sectional shape. The ultrasonic vibrators 20A, 20B are connected to the amplifier 24 via connection cords 22A, 22B,. respectively, and the amplifier 24 is connected to the commercial power supply via power supply cord 26. The maturation promoting device according to the present embodiment basically performs a maturation promotion function similar to that according to the previous embodiments

With a Japanese Sake subjected to a low power ultrasonic treatment according to the present invention, metabolism experiments were performed with respect to human beings, the result of which will be explained below. In this connection, the experiment method is as follows.

That is to say, Japanese Sake (16%) manufactured by Kabushiki Kaisha Hokusetsu Shuzo (Sado-gun, Niigata Prefecture, Japan) has been divided into two groups, one of which has been charged into a maturation tank having a capacity of 5 m³ and subjected to a weak power ultrasonic treatment for two weeks, under a condition of frequency of 40 kHz, an output of 0.35 x 10⁻⁴ W/cm² and 400 mVp.p. In this instance, there was used a vibrating body which is the same as that in the embodiment of Figs. 2(a) and 2(b). At the outset, untreated Japanese Sake in the amount of 0.5 g/kg as a control was taken by healthy adult voluntary individuals (four males and four females), and blood samples were collected after the lapse of 30 minutes, 60 minutes, 90 minutes, 150 minutes and 210 minutes, in order to prepare serum samples which were then subjected to ¹H-NMR analysis. Furthermore, after the expiration of one month, Japanese Sake subjected to a low power ultrasonic treatment was taken by the same individuals, to perform the same procedures.

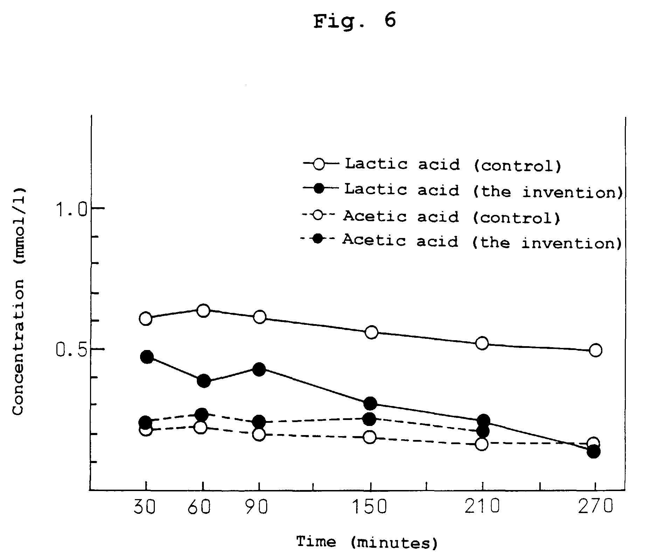

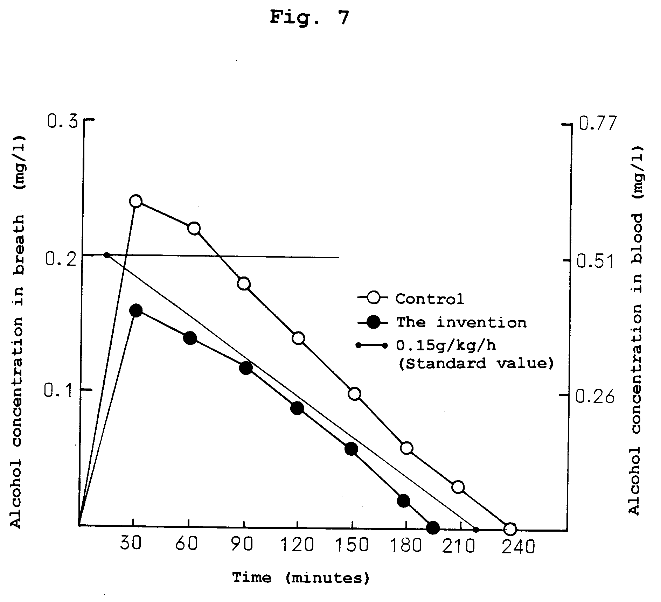

The NMR measurement was performed by JEOL EX400 (400 Hz, 9.3T) FT NMR, using 1 mmol/l of dimethylsulfoxide (DMSO) as an internal reference material, to calculate each concentration (mmol/l) of ethanol, lactic acid, alanine, and acetic acid. .A wide range ¹H-NMR signal due to protein was suppressed by using so-called Carr-Purcell-Meiboom-Gill pulses for the measurement of T₂,, while the water signal was suppressed by additionally using so-called Homo Gated Decoupling process, so that calculation has been performed eighteen times at an interval of 100 msec., frequency of 15 sec. and temperature of 30 °C, the result of which is shown in Fig. 6. Moreover, the ethanol concentration in breath was measured by 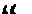 ALCOTEST 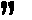 made by Invitek Company, Germany, the result of which is shown in Fig. 7.

As can be appreciated from Figs. 6 and 7, when Japanese Sake subjected to the weak ultrasonic treatment according to the present invention was taken as compared to the control, the metabolism of ethanol was faster by approximately 27% for males on average, by approximately 21% for female on average, and by approximately 22% for the total volunteers on average. There has been observed a sample wherein metabolism was higher by approximately 30% on individual basis. The ethanol concentration in exhalation also exhibited a similar tendency as the serum samples. Since there is no difference in the metabolism curve between the two types of Japanese Sakes, it can be concluded that a faster metabolism exhibited by Japanese Sake which has been subjected to the weak ultrasonic treatment is not due to the difference in function of the alcohol dehydrase, but due to a smaller cluster or dynamic structure of water-ethanol in the Japanese Sake, which serves to accelerate absorption in the human body and diffusion into the blood. As for the lactic acid concentration in the serum samples, the level is higher when untreated Japanese Sake was taken. Consequently, it is suggested that Japanese Sake subjected to the weak ultrasonic treatment according to the present invention serves to mitigate the burden to the metabolism of ethanol.

It can be appreciated from the foregoing description that the present invention provides a maturation promoting device which comprises a maturing tank of an industrial scale for containing an alcoholic drink or the like liquid which is to be matured, as well as an ultrasonic vibrator associated with said maturing tank, and an oscillator for exciting said ultrasonic vibrator, said ultrasonic vibrator having such an output characteristic that, in its excited state, a weak ultrasonic wave can be continuously applied to the liquid in said maturing tank. Therefore, such an arrangement makes it possible to positively promote maturation of alcoholic drinks or the like on industrial scale, due to irradiation of weak ultrasonic waves.

It is of course that the above-mentioned embodiments were presented solely by way of examples only, and various modifications and/or alterations are possible within the scope of the invention. As for the liquid which is to be subjected to a promoted maturation in accordance with the present invention, in particular, besides alcoholic drinks as typical example of the application, there can be listed liquid foods and drinks in general, such as seasonings, dressings, etc., as well as all other liquids for which it is considered desirable to stabilize the molecular structure, such as herb medicines, herb-based cosmetics, photographic developing agents, and the like.

## Claims

1. A device for promoting maturation of alcoholic drinks or the like, comprising: a maturing tank of industrial scale for containing an alcoholic drink or the like liquid which is to be matured: as well as an ultrasonic vibrator associated with said maturing tank, and an oscillator for exciting said ultrasonic vibrator, said ultrasonic vibrator having such an output characteristic that, in its excited state, a weak ultrasonic wave can be continuously applied to the liquid in said maturing tank.

2. The maturation promoting device according to claim 1, wherein said maturation tank has a capacity of approximately 5-10 m³.

3. The maturation promoting apparatus according to claim 1, wherein said ultrasonic vibrator has such an output characteristic that, in its excited state, a weak ultrasonic wave having a sound pressure level of approximately 0.35 x 10⁻⁴ W/cm² can be continuously applied to the liquid in said maturation tank.

4. The maturation promoting device according to claim 1, wherein said ultrasonic vibrator has such an output characteristic that, in its excited state, a weak ultrasonic wave of approximately 40 kHz and about 200-800 mVp.p can be continuously applied to the liquid in said maturation tank.

5. The maturation promoting device according to claim 4, wherein said ultrasonic vibrator has such an output characteristic that, in its excited state, a weak ultrasonic wave of approximately 40 kHz and about 400 mVp.p can be continuously applied to the liquid in said maturation tank.

6. The maturation promoting device according to claim 1, wherein said oscillator has a specification of which electric power consumption is approximately 0.5-1.0 W.

7. The maturation promoting device according to claim 1, wherein said ultrasonic vibrator is secured to an appropriate wall surface of said maturating tank.

8. The maturation promoting device according to claim 1, wherein said ultrasonic vibrator is arranged within a float-type sealed casing which floats on a liquid surface within said maturating tank.

9. The maturation promoting device according to claim 8, wherein said sealed casing is made of metallic material, such as stainless steel, titanium alloy or the like.

10. The maturation promoting device according to claim 8, wherein said sealed casing is filled therein with an inert gas.

11. A maturation promoting method carried out by using a maturation promoting device according to any one of claims 1-10, wherein an alcoholic drink or the like liquid contained in said maturation tank is continuously applied by said ultrasonic vibrator with a weak ultrasonic wave, so as to undergo a promoted maturation.

12. An alcoholic drink or the like liquid treated by a maturation promoting device according to any one of claims 1-10, said liquid having been continuously applied in said maturation tank with a weak ultrasonic wave by said ultrasonic vibrator and thereby subjected to a promoted maturation.
